# EUROPÄISCHE PATENTSCHRIFT

(11) **EP 3 529 190 B1**
(45) Veröffentlichungstag und Bekanntmachung des Hinweises auf die Patenterteilung: **18.11.2020**
(21) Anmeldenummer: 17791542.8
(22) Anmeldetag: 19.10.2017
(51) Int. Cl.: B66B 11/02, B64C 39/02, B64F 1/32, G06Q 50/32, B64F 1/36

(54) **AUFZUG SOWIE VERFAHREN ZUR LIEFERUNG VON PAKETEN**
AN ELEVATOR AND A METHOD TO DELIVER PACKAGES
ASCENSEUR ET PROCÉDÉ DE DISTRIBUTION POUR PAQUETS

(30) Priorität: 21.10.2016 AT 509622016
(43) Veröffentlichungstag der Anmeldung: 28.08.2019
(73) Patentinhaber: Steiner, Norbert, 1100 Wien (AT)
(72) Erfinder: Steiner, Norbert, 1100 Wien (AT)
(74) Vertreter: Wirnsberger & Lerchbaum Patentanwälte OG
(86) Internationale Anmeldenummer: PCT/AT2017/060275
(87) Internationale Veröffentlichungsnummer: WO 2018/071943

(56) Entgegenhaltungen:
- EP-A1- 1 566 357
- WO-A2-2014/080390
- JP-A- H0 597 360
- JP-A- H05 105 374
- JP-A- H09 286 508
- JP-A- 2003 238 053
- US-A1- 2013 233 653
- US-A1- 2015 158 599
- US-A1- 2015 317 596
- US-A1- 2016 257 423
- US-B1- 9 387 928
- US-B2- 7 894 939

## Beschreibung

Die Erfindung betrifft einen Aufzug zur Lieferung von Gegenständen wie Paketen und dergleichen, aufweisend eine Aufzugskabine und einen Aufzugsschacht mit mehreren seitlichen Öffnungen, über welche Ladegut auf einem ersten Weg in die Aufzugskabine einbringbar ist, wobei die Aufzugskabine im Aufzugsschacht verfahrbar ist.

Weiter betrifft die Erfindung ein Verfahren zur Lieferung eines Gegenstandes, insbesondere eines Paketes, in ein Gebäude mit einem Aufzug mit einer Aufzugskabine und einem Aufzugsschacht mit mehreren seitlichen Öffnungen, über welche Ladegut auf einem ersten Weg in die Aufzugskabine einbringbar ist, wobei die Aufzugskabine im Aufzugsschacht verfahrbar ist. Solch ein Verfahren zur Lieferung von Gegenständen sind z. B. aus den Anmeldungen JPH0597360 als auch JPH05105374A bekannt.

Aus dem Stand der Technik sind verschiedene Aufzüge und Verfahren zur Lieferung von Paketen bekannt geworden. Dabei wird ein Paket von einem Sender mittels eines Transportfahrzeuges, in aller Regel eines Lastkraftwagens, zu einem Empfänger transportiert. Ist der Empfänger nicht anzutreffen, wird das Paket zu einem Übergabeort transportiert, von welchem es der Empfänger mit einer schriftlichen Autorisierung oder dergleichen abholen kann. Nachteilig dabei ist, dass eine Auslieferung von Paketen einerseits für ein lieferndes Unternehmen mit hohem Personal- und Kostenaufwand verbunden ist. Andererseits entsteht auch bei einem Empfänger ein erheblicher Aufwand, wenn dieser zu einem Zeitpunkt, zu welchem die Lieferung erfolgt, nicht unter den Lieferadressen anzutreffen ist.

Um Personalkosten bei einer Lieferung von Paketen zu verringern, ist es aus dem Stand der Technik bekannt, Pakete mittels mannloser Transporteinrichtungen wie Flugdrohnen zu Empfängern zu transportieren. Dies ist beispielsweise bei Empfängern leicht möglich, welche in einem Haus mit Garten leben, weil ein Paket dann einfach im Garten abgesetzt werden kann. Bei Wohnungen in Häusern mit mehreren Geschossen und einem oder mehrere Aufzüge ist ein derartiges Verfahren jedoch nicht umsetzbar.

Hier setzt die Erfindung an. Aufgabe der Erfindung ist es, ein Set, umfassend eine Flugdrohne sowie einen Aufzug, der eingangs genannten Art derart weiterzubilden, dass bei Einbau in ein Gebäude eine Belieferung von in den Gebäuden lebenden Personen auch mit einer Flugdrohne oder dergleichen möglich ist.

Darüber hinaus soll ein Verfahren der eingangs genannten Art angegeben werden, mit welchem in einem Gebäude mit mehreren Geschossen lebenden Personen auf besonders effizienter Weise beliefert werden können.

Die erste Aufgabe wird erfindungsgemäß durch ein Set, umfassend eine Flugdrohne sowie einen Aufzug, der eingangs genannten Art gelöst, bei welchem ein Übergabebereich vorgesehen ist, in welchen über einen zweiten Weg, insbesondere mittels einer Drohne, ein Gegenstand wie ein Paket oder dergleichen transportierbar ist, wobei ein im Übergabebereich befindlicher Gegenstand aus dem Übergabebereich von einem Inneren der Aufzugskabine und/oder von einer der seitlichen Öffnungen aus entnehmbar ist.

Im Rahmen der Erfindung wurde erkannt, dass ein Aufzug zur Beförderung von Ladegut wie Personen in einem Gebäude auf einfache Weise auch dazu genutzt werden kann, in einem Gebäude mit mehreren Geschossen bzw. Etagen lebende Personen mit Paketen oder dergleichen zu versorgen, welche mittels einer Drohne angeliefert werden. So erstreckt sich ein Aufzug in aller Regel über eine gesamte Höhe eines Gebäudes, sodass Pakete beispielsweise an einem oberen Ende des Aufzugsschachtes mittels einer Drohne in den Aufzug eingebracht oder am Aufzugsschacht abgelegt werden können. Ferner weist ein Aufzug eine im Aufzugsschacht verfahrbare Aufzugskabine auf, sodass an den Aufzug übergebene Pakete auf einfache Weise im Gebäude zwischen Geschossen verfahren werden können, um diese zu einem jeweiligen Empfänger zu liefern.

Konstruktiv kann ein erfindungsgemäßes Set auf verschiedenste Weisen ausgebildet sein, welche ein Einbringen eines Paketes in den Übergabebereich von einem Bereich außerhalb bzw. oberhalb des Gebäudes bzw. des Aufzuges ermöglichen. Der Übergabebereich ist somit einerseits über den ersten Weg bzw. aus einem inneren und/oder von einer seitlichen Öffnung der Aufzugskabine aus erreichbar, um beispielsweise im Übergabebereich befindliche Pakete zu entnehmen. Darüber hinaus ist der Übergabebereich andererseits auch über einen zweiten Weg erreichbar, über welchen eine Flugdrohne Pakete zum Übergabebereich transportieren kann. Es versteht sich, dass der erste Weg und der zweite Weg in aller Regel nicht ident sind. Ferner ist es nicht erforderlich, dass der erste Weg gleichzeitig mit dem zweiten Weg passierbar ist. Beispielsweise kann der Aufzug in einem Anlieferzustand gebracht werden, in welchem der zweite Weg passierbar ist, jedoch nicht der erste Weg, sodass eine Person keinen Zutritt zum Übergabebereich hat. In diesem Anlieferzustand kann eine Schach-Einbringöffnung oder dergleichen geöffnet sein, durch welche eine Flugdrohne ein Paket in den Aufzug transportieren kann. Wenn sich im Übergabebereich ein Paket befindet, kann der Aufzug in einen Auslieferzustand gebracht werden, in welchem der Übergabebereich von einem Inneren der Aufzugskabine und/oder einer der seitlichen Öffnungen aus erreichbar ist, um einem Empfänger ein Entnehmen eines Paketes aus dem Übergabebereich zu ermöglichen. In diesem Auslieferzustand ist der zweite Weg üblicherweise nicht erreichbar. Dadurch werden Verletzungen von Personen durch Drohnen auf einfache Weise verhindert.

In aller Regel ist der Aufzug derart ausgebildet, dass der zweite Weg, auf welchem eine Drohne ein Paket zum Übergabebereich transportiert, für Benutzer des Aufzuges nicht erreichbar ist. Dies kann beispielsweise durch eine entsprechende Ansteuerung von Türen, Klappen und dergleichen zwischen einem von Personen frequentierten Bereich des Gebäudes und dem zweiten Weg bzw. einem Aufzugsschacht erreicht werden.

Günstig ist es, wenn die Aufzugskabine eine zumindest teilweise absenkbare Decke aufweist. Mit einer absenkbaren Decke kann einerseits ein Schutzraum oberhalb der Aufzugskabine gebildet werden, sodass der Aufzug mit reduziertem Schachtkopf oder auch ohne Schachtkopf ausgebildet sein kann, ohne gesetzliche Vorschriften zu verletzen. Hierzu kann die Decke beispielsweise immer dann abgesenkt werden, wenn sich in der Aufzugskabine keine Personen befinden und die Aufzugskabine in eine oberste Position gebracht wird. Dadurch ist ein permanenter Schutzraum zwischen einer Schachtkopfdecke und der Decke der Aufzugskabine gewährleistet. Konstruktiv kann eine absenkbare Decke beispielsweise mittels eines Hub- und Senkmechanismus umgesetzt werden.

Eine absenkbare Decke kann jedoch auch zur Auslieferung von mit Drohnen angelieferten Paketen genutzt werden. So kann in diesem Fall der Übergabebereich auf der Decke der Aufzugskabine gebildet sein. Um ein Paket im Übergabebereich abzulegen, kann am oder im Aufzugsschacht eine Öffnung vorgesehen sein, durch welche eine Drohne samt Paket in den Aufzug gelangen kann, um ein Paket auf der Aufzugskabine bzw. der absenkbaren Decke derselben abzusetzen. Die Öffnung, durch welche die Drohne in den Aufzugsschacht gelangt, kann dabei auch eine seitliche Öffnung des Aufzugsschachtes sein, beispielsweise eine Aufzugstüre eines obersten Geschosses eines entsprechenden Gebäudes. Üblicherweise ist dann durch zusätzliche Sicherungsmaßnahmen, wie beispielsweise eine weitere automatische Türe, sichergestellt, dass der entsprechende Bereich nicht durch Personen betretbar ist, um ein Verletzungsrisiko zu vermeiden.

Es kann auch vorgesehen sein, dass die Drohne nicht in ein Inneres des Gebäudes bzw. des Aufzugsschachtes fliegt, um das Paket zu übergeben. Wenn der Übergabebereich auf der Decke der Aufzugskabine gebildet ist, kann dies beispielsweise dadurch erreicht werden, dass die Aufzugskabine für eine Übergabe an eine oberste Endposition des Aufzugsschachtes verfahren wird, wonach eine Schacht-Einbringöffnung oder dergleichen geöffnet wird, sodass ein Paket von einer Drohne an einem oberen Ende des Aufzugsschachtes auf die Decke der Aufzugskabine gelegt werden kann.

Um ein Paket aus dem Übergabebereich zu entnehmen, wenn der Übergabebereich auf der Decke der Aufzugskabine gebildet ist, kann die Decke abgesenkt werden. Ist nicht nur ein Teil der Decke absenkbar, kann eine Entnahme dann von außerhalb der Aufzugskabine erfolgen, also von einer seitlichen Öffnung aus. Es versteht sich, dass die Aufzugskabine in diesem Fall unter Umständen nicht betretbar ist.

Zur Vermeidung von Verletzungen von sich in der Aufzugskabine befindenden Personen kann ein Sensor zur Erfassung eines Beladungszustandes der Aufzugskabine vorgesehen sein. Es kann dann eine Steuerung des Aufzuges derart eingerichtet sein, dass die Decke zur Entnahme eines Paketes aus dem Übergabebereich nur dann abgesenkt werden kann, wenn sich keine Personen in der Aufzugskabine befinden.

Ferner können ein Belastungssensor zur Erfassung von Personen in der Aufzugskabine und ein Türsensor zur Erfassung eines Zustandes der Türe vorgesehen sein. In dem Fall ist die Decke üblicherweise nur dann absenkbar, wenn sich keine Personen in der Aufzugskabine befinden und die Türe geschlossen ist. Die Türe wird dann zur Entnahme eines Paketes aus dem Übergabebereich erst dann entnommen, wenn die Decke entsprechend weit abgesenkt ist.

Günstig ist es, wenn auf dem Aufzugsschacht ein Landeplatz für eine Drohne vorgesehen ist. Die Drohne kann dann auf dem Aufzugsschacht landen, um ein Paket abzulegen. Das Paket kann gegebenenfalls von einer zusätzlichen Transporteinrichtung, einer Rutsche oder dergleichen, zum Übergabebereich transportiert werden. Ferner kann der Übergabebereich auch durch eine Schachtkopfdecke gebildet sein oder sich auf einer Schachtkopfdecke befinden.

Um ein unbefugtes Entnehmen von Paketen aus dem Übergabebereich zu vermeiden, ist mit Vorteil vorgesehen, dass der Übergabebereich in einem Übergabebehälter angeordnet ist, welcher insbesondere verschließbar bzw. als Safe ausgebildet ist. Der Übergabebehälter kann für eine einfache Belieferung mittels einer Drohne auf dem Aufzugsschacht vorgesehen sein. Dabei kann der Übergabebehälter auch über eine Datenverbindung mit einer Drohne verbunden sein, sodass der Übergabebehälter für eine Anlieferung automatisiert rechtzeitig geöffnet wird.

Zur Einbringung eines Paketes von einem Bereich außerhalb des Aufzugsschachtes in den Aufzugsschacht auf besonders einfache Weise, ist mit Vorteil vorgesehen, dass der Aufzugsschacht eine verschließbare Schacht-Einbringöffnung aufweist, über welche ein Gegenstand auf dem zweiten Weg zum Übergabebereich transportierbar ist, insbesondere mittels einer Drohne. Die Schacht-Einbringöffnung kann beispielsweise mit einer in der Regel dichtenden Schachtklappe reversibel verschließbar sein, um ein einfaches Öffnen der Schacht-Einbringöffnung zu gewährleisten.

Um eine Übergabe eines Paketes durch eine Drohne an den Übergabebereich unabhängig von einer Position der Aufzugskabine im Aufzugsschacht zu ermöglichen, ist es vorteilhaft, wenn auf der Aufzugskabine ein Landeplatz für eine Drohne vorgesehen ist. Eine Drohne samt Paket kann dann durch die Schacht-Einbringöffnung in den Aufzugsschacht bis zur Aufzugskabine fliegen. Es ist in diesem Fall nicht erforderlich, die Aufzugskabine für eine Anlieferung beispielsweise in eine oberste Position zu bringen. Eine Anlieferung von Paketen kann dann auch bei stark frequentierten Aufzügen kontinuierlich durchgeführt werden.

Eine Entnahme von Paketen oder dergleichen aus dem Übergabebereich durch Unbefugte kann auf einfache Weise verhindert werden, wenn an der Aufzugskabine ein Übergabebehälter zur Übernahme und Übergabe von angelieferten Gegenständen vorgesehen ist, welcher insbesondere verschließbar und/oder als Safe ausgebildet ist.

Es versteht sich, dass ein erfindungsgemäßer Aufzug natürlich nicht nur zur Anlieferung von für Bewohner eines Gebäudes, in welchem der Aufzug eingebaut ist, genutzt werden kann, sondern auch dazu, dass über den ersten Weg bzw. von einem Inneren einer Aufzugskabine und/oder einer der seitlichen Öffnungen aus ein Paket in den Übergabebereich gelegt wird. Das Paket kann anschließend über den zweiten Weg von einer Flugdrohne entnommen werden, sodass der Aufzug also auch zum Versenden von Paketen durch Bewohner des Gebäudes einsetzbar ist.

Günstig ist es, wenn der Übergabebereich von einem Inneren der Aufzugskabine und/oder einer der seitlichen Öffnung aus nur über einen verschließbaren Zugang erreichbar ist. Beispielsweise können Bewohner eines Gebäudes, in welchem der Aufzug angeordnet ist, mit einer entsprechenden Zugangsberechtigung ausgestattet werden. Ob ein Zugang zum Übergabebereich durch den verschließbaren Zugang ermöglicht wird, kann dann noch abhängig davon gemacht werden, ob ein im Übergabebereich befindliches Paket für eine am Übergabebereich bzw. am Zugang befindliche Person bestimmt ist. Dabei können auch mehrere Übergabebereiche bzw. Aufbewahrungsbehälter ähnlich Postfächern zur Aufnahme und Übergabe unterschiedlicher Pakete an unterschiedliche Personen vorgesehen sein. In dem Fall kann der Aufzug auch dazu eingerichtet sein, dass abhängig von einer sich am Aufzug identifizierenden Person ein jeweils zugeordneter Übergabebereich geöffnet wird, sodass sichergestellt ist, dass nur die jeweils dazu berechtigte Person Zugang zu ihrem Paket im Übergabebereich erhält.

In der Regel ist der Aufzug derart ausgebildet, dass der Zugang nur mittels einer Autorisierung über eine Datenverarbeitungsanlage öffenbar ist. Die Datenverarbeitungsanlage kann als einfacher Computer in der Aufzugskabine mit Bildschirm beispielsweise zur Eingabe eines Autorisierungscodes ausgebildet sein. Selbstverständlich kann die Datenverarbeitungsanlage auch zur Koppelung mit einem Smartphone oder dergleichen ausgebildet sein, sodass eine Autorisierung bzw. Identifikation eines berechtigten Benutzers beispielsweise über ein Smartphone möglich ist.

Günstig ist es, wenn die Datenverarbeitungsanlage als in der Aufzugskabine angeordneter Computer samt Bildschirm ausgebildet ist. Es können dann über den Bildschirm während einer Fahrt auch Werbebotschaften, Nachrichten oder dergleichen dargestellt werden. Ferner kann der Computer für eine barrierefreie visuelle und/oder akustische Notrufkommunikation genutzt werden. Des Weiteren kann der Computer zur Darstellung von Informationen betreffend das Gebäude oder die Hausverwaltung eingesetzt werden.

Darüber hinaus kann über den Bildschirm ein in der Aufzugskabine befindlicher Benutzer darüber informiert werden, ob sich im Übergabebereich ein oder mehrere Pakete befinden, gegebenenfalls für wen diese bestimmt sind. Ferner kann der Computer mit Internetverbindung natürlich auch zur Bestellung von Waren sowie zur Identifikation eines Benutzers zur Übernahme eines im Übergabebereich befindlichen Paketes und zur Protokollierung von Paketübernahmen eingesetzt werden.

Es ist von Vorteil, wenn eine Steuerung des Aufzuges über eine Datenverbindung mit einer Transporteinrichtung wie einer Drohne und/oder einer Zentrale, von welcher aus die Transporteinrichtung steuerbar ist, verbunden ist, sodass der Aufzug abgestimmt auf eine Ankunft der Transporteinrichtung steuerbar ist. Der Aufzug kann somit auf einfache Weise automatisiert abhängig von einer tatsächlichen Ankunftszeit der Drohne in einen Zustand gebracht werden, in welchem ein Paket mittels der Drohne in den Übergabebereich transportiert wird. Je nach konkreter konstruktiver Ausbildung kann hierzu beispielsweise eine Schacht-Einbringöffnung geöffnet und/oder die Aufzugskabine in eine oberste Position verfahren werden. Dabei kann auch vorgesehen sein, dass eine Steuerung des Aufzuges mit einer Steuerung der Drohne kommuniziert, sodass beispielsweise Fahrten von sich aktuell in der Aufzugskabine befindlichen Personen noch abgeschlossen bzw. durchgeführt werden, bevor der Aufzug in einen Anlieferzustand gebracht wird.

Die zweite Aufgabe wird erfindungsgemäß durch ein Verfahren der eingangs genannten Art gelöst, bei welchem ein Gegenstand über einen zweiten Weg zu einem Übergabebereich transportiert wird, insbesondere mittels einer Drohne, wonach der Gegenstand von einem Inneren der Aufzugskabine oder einer der seitlichen Öffnungen aus entnommen wird.

Dies ermöglicht ein effizientes Beliefern auch von Personen, welche in einem Gebäude mit mehreren Geschossen leben. Üblicherweise wird ein erfindungsgemäßer Aufzug zur Durchführung des Verfahrens eingesetzt. Es versteht sich, dass das Verfahren für Gegenstände jeglicher Art eingesetzt werden kann, also auch für einen Transport von Lebewesen.

Günstig ist es, wenn eine Entnahme aus dem Übergabebereich nur nach Autorisierung mittels einer Datenverarbeitungseinrichtung erfolgt. Dadurch wird sichergestellt, dass ein Paket nur an die jeweils hierzu berechtigte Person übergeben wird.

Ein besonders kostengünstiger Transport eines Paketes bzw. einer Lieferung ist möglich, wenn der Gegenstand mit einer Flugdrohne zum Übergabebereich transportiert wird.

Um ein sehr effizientes Verfahren zu erreichen, ist es von Vorteil, wenn eine Steuerung des Aufzuges mit einer Transporteinrichtung, insbesondere einer Flugdrohne, zum Transport des Gegenstandes über eine Datenverbindung verbunden ist und der Aufzug für einen Transport des Gegenstandes in den Übergabebereich abgestimmt auf eine Ankunft der Transporteinrichtung am Aufzug in einen Anlieferzustand gebracht wird, in welchem der zweite Weg passierbar ist, wobei insbesondere eine Schacht-Einbringöffnung geöffnet wird.

Ein bei einem erfindungsgemäßen Verfahren eingesetzter Aufzug wird üblicherweise für einen Transport von Personen im Gebäude verwendet. Um zu verhindern, dass eine Paketlieferung einen Personentransport stört, ist es günstig, wenn ein Beladungszustand der Aufzugskabine erfasst wird und die Aufzugskabine bei Ankunft einer Transporteinrichtung erst dann in den Anlieferzustand gebracht wird, wenn sich keine Personen in der Aufzugskabine befinden. Hierzu kann vorgesehen sein, dass die Drohne in einer Warteposition beispielsweise oberhalb des Gebäudes verharrt, bis der Aufzug in den Anlieferzustand gebracht wird. Alternativ kann die Drohne das Paket in einem Pufferlager, beispielsweise auf einem Dach des Gebäudes, positionieren, von welchem es anschließend gegebenenfalls durch separate Beförderungsmittel zum Übergabebereich transportiert wird, wenn sich keine Personen mehr in der Aufzugskabine befinden.

Es hat sich bewährt, dass eine Steuerung des Aufzuges den Aufzug nach Identifikation eines berechtigten Benutzers über eine Datenverarbeitungseinrichtung in einen Auslieferzustand bringt, in welchem der Übergabebereich von einem Inneren der Aufzugskabine und/oder einer der seitlichen Öffnungen aus für einen Benutzer erreichbar ist. Somit kann sich beispielsweise ein Empfänger eines Paketes bzw. eine berechtigte Person mittels der Datenverarbeitungseinrichtung identifizieren, um zu einem in Übergabebereich befindlichen Paket zu gelangen. Die Identifikation kann beispielsweise mittels eines Codes, einer biometrischen Identifikation wie einer Gesichtserkennung oder einer Schlüsselkarte erfolgen.

Üblicherweise kann beim erfindungsgemäßen Set, der Aufzug in einen Anlieferzustand und einen Auslieferzustand gebracht werden, wobei im Auslieferzustand ein im Übergabebereich befindliches Paket auf dem ersten Weg bzw. von einer seitlichen Öffnung aus entnehmbar ist und wobei im Anlieferzustand ein Paket auf dem zweiten Weg in den Übergabebereich einbringbar ist.

Um neben einem effizienten Empfangen von Paketen auch ein besonders effizientes Versenden von Paketen zu ermöglichen, ist es günstig, wenn ein Gegenstand von einem Inneren der Aufzugskabine und/oder einer der seitlichen Öffnungen aus im Übergabebereich abgelegt wird, wonach der Gegenstand mittels einer Transporteinrichtung wie einer Drohne über den zweiten Weg abtransportiert wird. Es versteht sich somit, dass das Verfahren auch in inverser Richtung für ein Versenden von Paketen umgesetzt werden kann. Auch hierbei kann die Datenverarbeitungseinrichtung genutzt werden, um Absender und Empfänger eines im Übergabebereich positionierten Paketes zu definieren und eine Drohne für eine Abholung des Paketes anzufordern. Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:

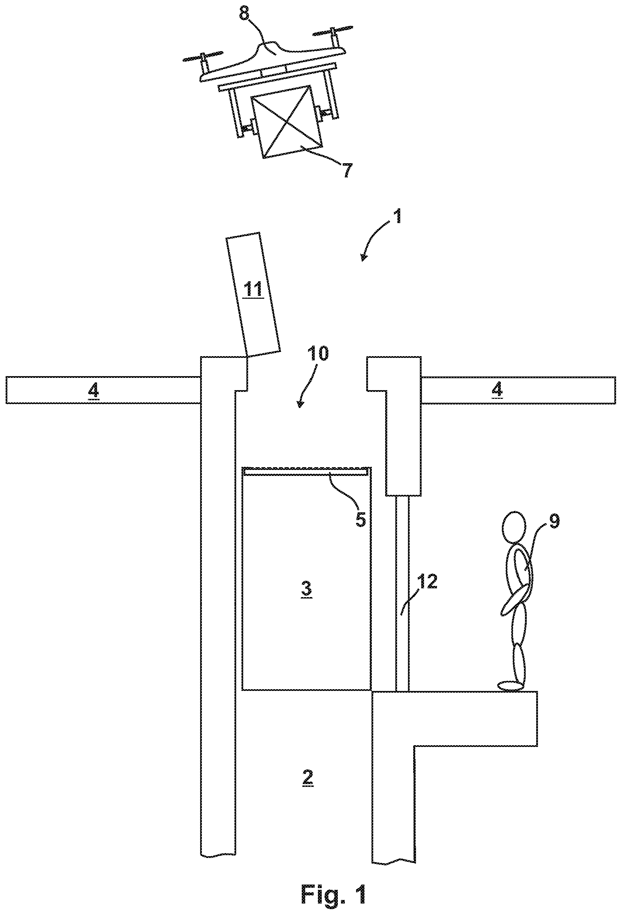

Fig. 1 bis 4 einen erfindungsgemäßen Aufzug in unterschiedlichen Zuständen.

Fig. 1 zeigt einen erfindungsgemäßen Set mit einem Aufzug 1 in einem Anlieferzustand mit einem Aufzugsschacht 2, welcher etwa auf Höhe eines Daches 4 eines Gebäudes endet bzw. aus einem Gebäude ragt, in welchem der Aufzug 1 angeordnet ist. Eine den Aufzugsschacht 2 an einem oberen Ende abschließende Schachtabschlussdecke weist dabei eine durch eine Schachtklappe 11 verschließbare Schacht-Einbringöffnung auf, durch welche Pakete 7 und dergleichen in den Aufzugsschacht 2 und somit in das Gebäude lieferbar sind.

In dem in Fig. 1 dargestellten Anlieferzustand ist die Schachtklappe 11 geöffnet. Ferner befindet sich eine im Aufzugsschacht 2 vertikal verfahrbare Aufzugskabine 3 in einer obersten Position. Darüber hinaus ist eine absenkbare Decke 5 der Aufzugskabine 3 im Anlieferzustand nicht abgesenkt. Ein mittels einer Drohne 8 über die Schacht-Einbringöffnung angeliefertes Paket 7 kann somit auf der Decke 5 der Aufzugskabine 3 abgelegt werden, auf welcher sich hier ein Übergabebereich 10 für angelieferte Pakete 7 befindet. Der dargestellte Aufzug 1 wird üblicherweise für einen Transport von Personen 9 im Gebäude verwendet, welche auf einem ersten Weg durch eine Türe 12 und eine seitliche Öffnung 6 im Aufzugsschacht 2 in die Aufzugskabine 3 gelangen können.

Dabei ist in der Regel eine mit der anliefernden Drohne 8 verbundene Steuerung des Aufzuges 1 vorgesehen, um beispielsweise den Aufzug 1 erst dann in einen Anlieferzustand zu bringen, wenn sich keine Personen 9 mehr im Aufzug 1 befinden. Weiter kann vorgesehen sein, dass eine Türe 12 des Aufzuges 1 erst dann für einen Personentransport öffenbar ist, wenn das mit der Drohne 8 auf einem zweiten Weg durch die Schacht-Einbringöffnung eingebrachte Paket 7 auf der Decke 5 bzw. dem Übergabebereich 10 abgelegt wurde.

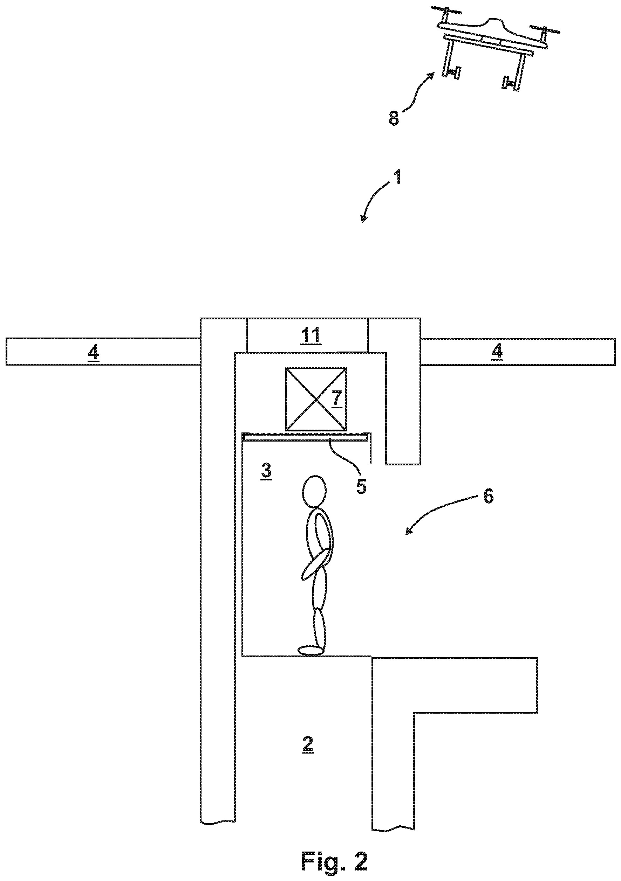

Fig. 2 zeigt den Aufzug 1 aus Fig. 1 in einem Zustand, nachdem die Drohne 8 das Paket 7 auf der Decke 5 der Aufzugskabine 3 bzw. im Übergabebereich 10 abgelegt und das Gebäude wieder verlassen hat, wobei die Schachtklappe 11 geschlossen ist. In diesem Zustand ist der Aufzug 1 wieder uneingeschränkt für einen Transport von Personen 9 einsetzbar, welche auf einem ersten Weg durch eine seitliche Öffnung 6 des Aufzugsschachtes 2 in ein Inneres der Aufzugskabine 3 gelangen können.

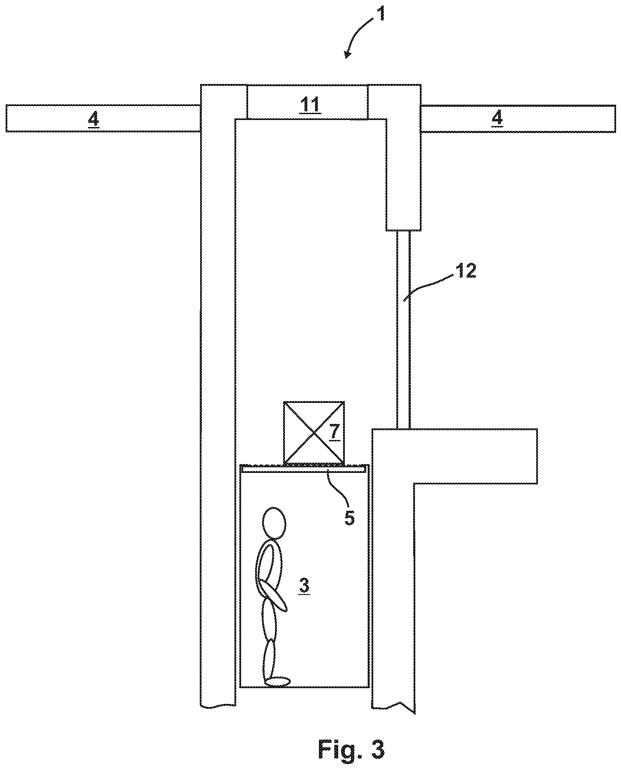

Fig. 3 zeigt den Aufzug 1 bei einem Transport einer Person 9 mit einem Paket 7 im Übergabebereich 10. Dass unbefugte Personen 9 bzw. andere Personen 9 als ein Empfänger des Paketes 7 keinen Zugriff auf den Übergabebereich 10 bzw. das Paket 7 erhalten, wird beim dargestellten Ausführungsbeispiel auf einfache Weise dadurch erreicht, dass der Übergabebereich 10 auf der Decke 5 der Aufzugskabine 3 angeordnet ist. Es ist somit von einem Inneren der Aufzugskabine 3 aus aufgrund der Decke 5 und von einem Geschoss aus aufgrund einer geschlossenen Türe 12 kein Zugriff möglich. Natürlich sind auch alternative Ausbildungen möglich, beispielsweise mit einem verschließbaren Behälter wie einem Safe, in welchen Pakete 7 auf dem zweiten Weg einbringbar sind und welcher von einer hierzu berechtigten Person 9 aus einem Inneren der Aufzugskabine 3 aus zugänglich ist. Ferner kann die Decke 5 auch nur zu einem Teil absenkbar sein, sodass eine sich in der Aufzugskabine 3 neben einem absenkbaren Teil der Decke 5 befindliche Person 9 ein Paket 7 aus dem Übergabebereich 10 entnehmen kann, wenn der absenkbare Teil der Decke 5 abgesenkt ist.

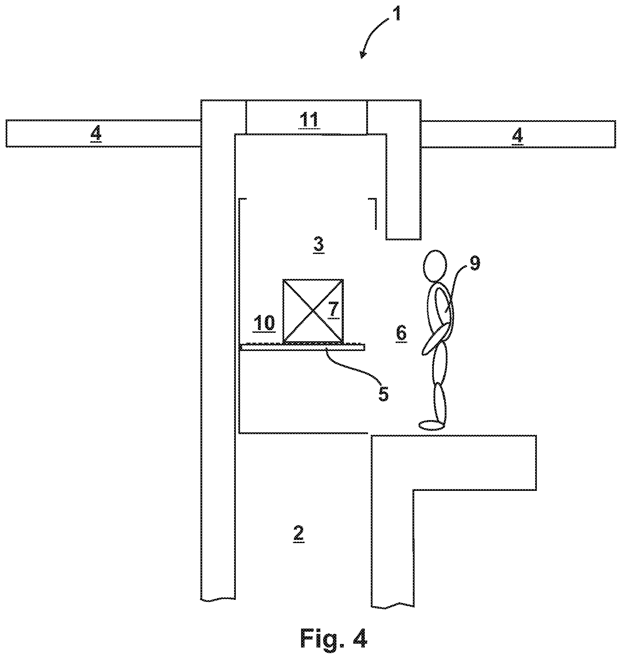

Fig. 4 zeigt den Aufzug 1 in einem Auslieferzustand. Wie ersichtlich befindet sich dabei die Aufzugskabine 3 vor einer seitlichen Öffnung 6 des Aufzugsschachtes 2. Ferner ist die in Fig. 4 nicht dargestellte Türe 12 geöffnet und die Decke 5 der Aufzugskabine 3 abgesenkt, sodass ein auf dem durch die Decke 5 der Aufzugskabine 3 gebildeten Übergabebereich 10 befindliches Paket 7 von der seitlichen Öffnung 6 aus entnommen werden kann. In diesem Zustand ist die Aufzugskabine 3 nicht betretbar. Um Verletzungen von sich in der Aufzugskabine 3 befindenden Personen 9 zu vermeiden, sind üblicherweise Sensoren zur Erfassung eines Beladungszustandes der Aufzugskabine 3 und eines Zustandes der Türe 12 vorgesehen, sodass auch bei Identifikation eines Empfängers eines im Übergabebereich 10 befindlichen Paketes 7 die Decke 5 nur dann abgesenkt bzw. der Aufzug 1 nur dann in einen Auslieferzustand gebracht wird, wenn sich in der Aufzugskabine 3 keine Personen 9 befinden und die Türe 12 geschlossen ist. Die Türe 12 wird dann erst dann geöffnet, wenn die Decke 5 zur Entnahme des Paketes 7 abgesenkt ist.

Mittels einer Datenverarbeitungseinrichtung kann der Aufzug 1 auch zu einer frei definierbaren Zeit oder abhängig von bestimmten Bedingungen in den Auslieferzustand gebracht werden, beispielsweise wenn sich ein Empfänger in der jeweiligen Etage befindet. So kann ein Empfänger bei einem üblicherweise in der Aufzugskabine 3 angeordneten Bildschirm, welcher mit einer Datenverarbeitungseinrichtung verbunden ist, oder über ein Smartphone eine Zeit angeben, zu welcher eine Zustellung erfolgen soll, indem die Aufzugskabine 3 in einer jeweiligen Etage positioniert wird und der Aufzug 1 in den Auslieferzustand gebracht wird. Somit bleibt das Paket 7 bis zu einer gewünschten Übernahme sicher im Übergabebereich 10 verwahrt.

Nachdem der dargestellte Aufzug 1 mit einer absenkbaren Decke 5 ausgebildet ist, kann der Aufzug 1 mit einem reduzierten Schachtkopf ausgebildet sein, weil die Decke 5 zur Bildung eines permanenten Schutzraumes zwischen der Decke 5 und der Schachtabschlussdecke bei Bedarf abgesenkt werden kann. Dadurch ist eine Herstellung formschöner Gebäude mit reduziertem Schachtkopf möglich, bei welchen ein Schachtkopf nicht oder zumindest nicht wesentlich aus einem Dach 4 des Gebäudes ragt.

Mit einem erfindungsgemäßen Set ist eine effiziente Belieferung von in einem Haus mit mehreren Geschossen wohnenden Personen 9 mittels Drohnen 8 möglich. Dadurch können Logistikkosten beträchtlich gesenkt werden. Darüber hinaus können mit einem erfindungsgemäßen Aufzug 1 sowie in einem entsprechenden Verfahren auch Pakete 7 von Bewohnern eines jeweiligen Gebäudes versandt werden, indem diese im Übergabebereich 10 abgelegt werden.

## Patentansprüche

1. Verfahren zur Lieferung eines Gegenstandes, insbesondere eines Paketes (7), in ein Gebäude mit einem Aufzug (1) mit einer Aufzugskabine (3) und einem Aufzugsschacht (2) mit mehreren seitlichen Öffnungen (6), über welche Ladegut auf einem ersten Weg in die Aufzugskabine (3) einbringbar ist, wobei die Aufzugskabine (3) im Aufzugsschacht (2) verfahrbar ist, **dadurch gekennzeichnet, dass** ein Gegenstand über einen zweiten Weg mit einer Flugdrohne (8) zu einem Übergabebereich (10) transportiert wird, wonach der Gegenstand von einem Inneren der Aufzugskabine (3) oder einer der seitlichen Öffnungen (6) aus entnommen wird.

2. Verfahren nach Anspruch 2, **dadurch gekennzeichnet, dass** eine Entnahme aus dem Übergabebereich (10) nur nach Autorisierung mittels einer Datenverarbeitungseinrichtung erfolgt.

3. Verfahren nach Anspruch 1 oder 2, **dadurch gekennzeichnet, dass** eine Steuerung des Aufzuges (1) mit einer Transporteinrichtung, insbesondere einer Flugdrohne, zum Transport des Gegenstandes über eine Datenverbindung verbunden ist und der Aufzug (1) für einen Transport des Gegenstandes in den Übergabebereich (10) abgestimmt auf eine Ankunft der Transporteinrichtung am Aufzug (1) in einen Anlieferzustand gebracht wird, in welchem der zweite Weg passierbar ist, wobei insbesondere eine Schacht-Einbringöffnung geöffnet wird.

4. Verfahren nach Anspruch 3, **dadurch gekennzeichnet, dass** ein Beladungszustand der Aufzugskabine (3) erfasst wird und die Aufzugskabine (3) bei Ankunft einer Transporteinrichtung erst dann in den Anlieferzustand gebracht wird, wenn sich keine Personen (9) in der Aufzugskabine (3) befinden.

5. Verfahren nach einem der Ansprüche 1 bis 4, **dadurch gekennzeichnet, dass** eine Steuerung des Aufzuges (1) den Aufzug (1) nach Identifikation eines berechtigten Benutzers über eine Datenverarbeitungseinrichtung in einen Auslieferzustand bringt, in welchem der Übergabebereich (10) von einem Inneren der Aufzugskabine (3) und/oder einer der seitlichen Öffnungen (6) aus für einen Benutzer erreichbar ist.

6. Verfahren nach einem der Ansprüche 1 bis 5, **dadurch gekennzeichnet, dass** ein Gegenstand von einem Inneren der Aufzugskabine (3) und/oder einer der seitlichen Öffnungen (6) aus im Übergabebereich (10) abgelegt wird, wonach der Gegenstand mittels einer Transporteinrichtung wie einer Flugdrohne (8) über den zweiten Weg abtransportiert wird.

7. Set, umfassend eine Flugdrohne sowie einen Aufzug (1) zur Lieferung von Gegenständen wie Paketen (7) und dergleichen, wobei der Aufzug (1) eine Aufzugskabine (3) und einen Aufzugsschacht (2) mit mehreren seitlichen Öffnungen (6), über welche Ladegut auf einem ersten Weg in die Aufzugskabine (3) einbringbar ist, aufweist, wobei die Aufzugskabine (3) im Aufzugsschacht (2) verfahrbar ist, **dadurch gekennzeichnet, dass** ein Übergabebereich (10) vorgesehen ist, in welchen über einen zweiten Weg mit der Flugdrohne ein Gegenstand wie ein Paket (7) oder dergleichen transportierbar ist, wobei ein im Übergabebereich (10) befindlicher Gegenstand aus dem Übergabebereich (10) von einem Inneren der Aufzugskabine (3) und/oder von einer der seitlichen Öffnungen (6) aus entnehmbar ist.

8. Set nach Anspruch 7, **dadurch gekennzeichnet, dass** die Aufzugskabine (3) eine zumindest teilweise absenkbare Decke (5) aufweist.

9. Set nach Anspruch 7 oder 8, **dadurch gekennzeichnet, dass** ein Sensor zur Erfassung eines Beladungszustandes der Aufzugskabine (3) vorgesehen ist.

10. Set nach einem der Ansprüche 7 bis 9, **dadurch gekennzeichnet, dass** auf dem Aufzugsschacht (2) ein Landeplatz für eine Flugdrohne (8) vorgesehen ist.

11. Set nach einem der Ansprüche 7 bis 10, **dadurch gekennzeichnet, dass** auf dem Aufzugsschacht (2) ein Übergabebehälter zur Übernahme von angelieferten Gegenständen vorgesehen ist, welcher insbesondere verschließbar ist.

12. Set nach einem der Ansprüche 7 bis 11, **dadurch gekennzeichnet, dass** der Aufzugsschacht (2) eine verschließbare Schacht-Einbringöffnung aufweist, über welche ein Gegenstand auf dem zweiten Weg zum Übergabebereich (10) transportierbar ist, insbesondere mittels einer Flugdrohne (8).

13. Set nach einem der Ansprüche 7 bis 12, **dadurch gekennzeichnet, dass** auf der Aufzugskabine (3) ein Landeplatz für eine Flugdrohne (8) vorgesehen ist.

14. Set nach einem der Ansprüche 7 bis 13, **dadurch gekennzeichnet, dass** an der Aufzugskabine (3) ein Übergabebehälter zur Übernahme und Übergabe von angelieferten Gegenständen vorgesehen ist, welcher insbesondere verschließbar ist.

15. Set nach einem der Ansprüche 7 bis 14, **dadurch gekennzeichnet, dass** der Übergabebereich (10) von einem Inneren der Aufzugskabine (3) und/oder einer der seitlichen Öffnungen (6) aus nur über einen verschließbaren Zugang erreichbar ist.

## Claims

1. A method for delivering an object, in particular a package (7), into a building having a lift (1) with a lift car (3) and a lift shaft (2) having a plurality of lateral openings (6), via which cargo can be introduced into the lift car (3) via a first path, the lift car (3) being movable within the lift shaft (2),
**characterised in that**
an object is transported to a transfer region (10) via a second path using a drone (8), after which the object is removed from the interior of the lift car (3) or from one of the lateral openings (6).

2. The method according to Claim 2,
**characterised in that**
removal from the transfer region (10) takes place only after authorisation by means of a data processing device.

3. The method according to Claim 1 or 2,
**characterised in that**
a controller of the lift (1) is connected via a data link to a transport device, in particular a drone, for transporting the object, and the lift (1) is brought into a receiving state, in which the second path is open, in synchronisation with the arrival of the transport device at the lift (1) for transport of the object into the transfer region (10), wherein in particular a shaft introduction opening is opened.

4. The method according to Claim 3,
**characterised in that**
a loading state of the lift car (3) is sensed, and the lift car (3) is brought into the receiving state on arrival of a transport device only when there are no persons (9) in the lift car (3).

5. The method according to any one of Claims 1 to 4,
**characterised in that**
a controller of the lift (1) brings the lift (1) into a handover state, in which the transfer region (10) is accessible to a user from the interior of the lift car (3) and/or from one of the lateral openings (6), after identification of an authorised user via a data processing device.

6. The method according to any one of Claims 1 to 5,
**characterised in that**
an object is deposited in the transfer region (10) from the interior of the lift car (3) and/or from one of the lateral openings (6), after which the object is transported away via the second path by means of a transport device such as a drone (8).

7. A kit, comprising a drone and a lift (1) for delivering objects such as packages (7) and the like, the lift (1) having a lift car (3) and a lift shaft (2) having a plurality of lateral openings (6), via which cargo can be introduced into the lift car (3) via a first path, the lift car (3) being movable within the lift shaft (2),
**characterised in that**
a transfer region (10) is provided, into which an object such as a package (7) or the like can be transported via a second path using the drone, wherein an object located in the transfer region (10) can be removed from the transfer region (10) from the interior of the lift car (3) and/or from one of the lateral openings (6).

8. The kit according to Claim 7,
**characterised in that**
the lift car (3) has an at least partially lowerable ceiling (5).

9. The kit according to Claim 7 or 8,
**characterised in that**
a sensor is provided for sensing a loading state of the lift car (3).

10. The kit according to any one of Claims 7 to 9,
**characterised in that**
a landing pad for a drone (8) is provided on the lift shaft (2).

11. The kit according to any one of Claims 7 to 10,
**characterised in that**
a transfer container for accepting received objects is provided on the lift shaft (2), said transfer container being in particular closable.

12. The kit according to any one of Claims 7 to 11,
**characterised in that**
the lift shaft (2) has a closable shaft introduction opening, via which an object can be transported to the transfer region (10) via the second path, in particular by means of a drone (8).

13. The kit according to any one of Claims 7 to 12,
**characterised in that**
a landing pad for a drone (8) is provided on the lift car (3).

14. The kit according to any one of Claims 7 to 13,
**characterised in that**
a transfer container for accepting and transferring received objects is provided on the lift car (3), said transfer container being in particular closable.

15. The kit according to any one of Claims 7 to 14,
**characterised in that**
the transfer region (10) is accessible from the interior of the lift car (3) and/or from one of the lateral openings (6) only via a closable access point.

## Revendications

1. Procédé, destiné à livrer un objet, notamment un paquet (7) dans un bâtiment pourvu d'un ascenseur (1) doté d'une cabine d'ascenseur (3) et d'une gaine d'ascenseur (2) pourvue de plusieurs ouvertures (6) latérales, par l'intermédiaire desquelles un produit à charger est susceptible d'être introduit par une première voie dans la cabine d'ascenseur (3), la cabine d'ascenseur (3) étant déplaçable dans la gaine d'ascenseur (2), **caractérisé en ce qu'**un objet est transporté par une deuxième voie à l'aide d'un drone (8) vers une zone de transfert (10), suite à quoi, l'objet est prélevé à partir d'un intérieur de cabine d'ascenseur (3) ou de l'une des ouvertures (6) latérales.

2. Procédé selon la revendication 2, **caractérisé en ce qu'**un prélèvement hors de la zone de transfert (10) n'a lieu qu'après autorisation au moyen d'un système de traitement des données.

3. Procédé selon la revendication 1 ou 2, **caractérisé en ce qu'**un système de commande de l'ascenseur (1) est connecté avec un système de transport, notamment avec un drone, pour le transport de l'objet par l'intermédiaire d'une liaison de données et **en ce que** pour le transport de l'objet dans la zone de transfert (10) synchronisé avec une arrivée du système de transport à ascenseur (1), l'ascenseur (1) est amené dans un état de livraison dans lequel la deuxième voie est susceptible d'être passée, notamment une ouverture d'introduction dans la gaine s'ouvrant.

4. Procédé selon la revendication 3, **caractérisé en ce qu'**un état de chargement de la cabine d'ascenseur (3) est détecté et à l'arrivée d'un système de transport, la cabine d'ascenseur (3) n'est amenée dans un état de livraison que lorsque aucune personne (9) ne se trouve dans la cabine d'ascenseur (3).

5. Procédé selon l'une quelconque des revendications 1 à 4, **caractérisé en ce qu'**après l'identification d'un utilisateur autorisé, un système de commande de l'ascenseur (1) amène l'ascenseur (1) par l'intermédiaire d'un système de traitement des données dans un état de livraison dans lequel la zone de transfert (10) est accessible à un utilisateur à partir d'un intérieur de la cabine d'ascenseur (3) et/ou de l'une des ouvertures (6) latérales.

6. Procédé selon l'une quelconque des revendications 1 à 5, **caractérisé en ce qu'**un objet est déposé à partir d'un intérieur de la cabine d'ascenseur (3) et/ou de l'une des ouvertures (6) latérales dans la zone de transfert (10), suite à quoi, l'objet est évacué par l'intermédiaire de la deuxième voie au moyen d'un système de transport, tel qu'un drone (8).

7. Kit, comprenant un drone, ainsi qu'un ascenseur (1) pour la livraison d'objets, tels que des paquets (7) et similaires, l'ascenseur (1) comportant une cabine d'ascenseur (3) et une gaine d'ascenseur (2) pourvue de plusieurs ouvertures (6) latérales, par l'intermédiaire desquelles un produit à charger est susceptible d'être introduit par une première voie dans la cabine d'ascenseur (3), la cabine d'ascenseur (3) étant déplaçable dans la gaine d'ascenseur (2), **caractérisé en ce qu'**il est prévu une zone de transfert (10) dans laquelle par une deuxième voie, un objet tel qu'un paquet (7) ou similaire est susceptible d'être transporté par une deuxième voie à l'aide du drone, un objet se trouvant dans la zone de transfert (10) étant susceptible d'être prélevé dans la zone de transfert (10), à partir d'un intérieur de la cabine d'ascenseur (3) et/ou de l'une des ouvertures (6) latérales.

8. Kit selon la revendication 7, **caractérisé en ce que** la cabine d'ascenseur (3) comporte un plafond (5) au moins partiellement abaissable.

9. Kit selon la revendication 7 ou 8, **caractérisé en ce qu'**il est prévu un capteur pour détecter un état de chargement de la cabine d'ascenseur (3).

10. Kit selon l'une quelconque des revendications 7 à 9, **caractérisé en ce que** sur la gaine d'ascenseur (2) est prévu un emplacement d'atterrissage pour un drone (8).

11. Kit selon l'une quelconque des revendications 7 à 10, **caractérisé en ce que** sur la gaine d'ascenseur (2) est prévu un conteneur de transfert, destiné à reprendre les objets livrés, lequel est notamment verrouillable.

12. Kit selon l'une quelconque des revendications 7 à 11, **caractérisé en ce que** la gaine d'ascenseur (2) comporte une ouverture d'introduction dans la gaine verrouillable, par l'intermédiaire de laquelle un objet est susceptible d'être transporté par la deuxième voie vers la zone de transfert (10), notamment en moyen d'un drone (8).

13. Kit selon l'une quelconque des revendications 7 à 12, **caractérisé en ce que** sur la cabine d'ascenseur (3) est prévu un emplacement d'atterrissage pour un drone (8) .

14. Kit selon l'une quelconque des revendications 7 à 13, **caractérisé en ce que** sur la cabine d'ascenseur (3) est prévu un conteneur de transfert, destiné à reprendre et à transférer des objets livrés, lequel est notamment verrouillable.

15. Kit selon l'une quelconque des revendications 7 à 14, **caractérisé en ce que** la zone de transfert (10) n'est accessible à partir d'un intérieur de la cabine d'ascenseur (3) et/ou de l'une des ouvertures (6) latérales uniquement par l'intermédiaire d'un accès verrouillable.
